# EUROPÄISCHE PATENTSCHRIFT

(11) **EP 0 384 369 B1**
(45) Veröffentlichungstag und Bekanntmachung des Hinweises auf die Patenterteilung: **01.05.1996**
(21) Anmeldenummer: 90103185.6
(22) Anmeldetag: 20.02.1990
(51) Int. Cl.: B32B 7/04, B32B 3/12, B32B 7/12

(54) **Verfahren zur Herstellung von Verbundwerkstoffen**
Process for the manufacture of composite materials
Procédé pour la fabrication de matériaux composites

(30) Priorität: 22.02.1989 DE 3905404
(43) Veröffentlichungstag der Anmeldung: 29.08.1990
(73) Patentinhaber: HOECHST AKTIENGESELLSCHAFT, D-65926 Frankfurt am Main (DE)
(72) Erfinder: Holz, Karl-Heinz, D-6230 Frankfurt am Main (DE); Lüke, Johannes, D-6240 Königstein/Taunus (DE); Riederer, Wolfgang, D-6238 Hofheim am Taunus (DE)

(56) Entgegenhaltungen:
- AU-A- 483 635
- FR-A- 2 062 063
- US-A- 3 738 886

## Beschreibung

Die vorliegende Erfindung betrifft ein verbessertes Verfahren zur Herstellung von Verbundwerkstoffen aus Kernmaterialien und Deckschichten durch Verkleben der Kernmaterialien mit den Deckschichten mit einem flüssigen und/oder pastösen Klebstoff.

Die Leichtbauweise ist bei vielen technischen Konstruktionen eine ständige Herausforderung. Neben der Gewichtsreduktion und der Materialersparnis ist gleichzeitig eine verbesserte Funktion bei gleichzeitiger Gewährleistung der Stabilität und Festigkeit der Verbundwerkstoffe erwünscht. Aus "Hoechst High Chem Magazin Nr. 3", 1987 sind Leichtbaustoffe bekannt, die zu einer maximalen Reduzierung des Festmaterials führen und gleichzeitig eine hohe Stabilität aufweisen. Das besondere Merkmal dieser Sandwich-Struktur besteht in einer feinen Netzwerkstruktur mit Verbindungsstegen, Knotenpunkten und einer Vielzahl offener Zwischenräume des Kernmaterials. Erreicht wird die Struktur durch die Ausformung einer textilen Fläche, die mit Kunstharz verfestigt ist.

Eine spezielle Ausformung des textilen Ausgangsmaterials für die Anwendung als Kern in Sandwich-Konstruktionen ist die Strukturwabe. Ein mit Kunstharz imprägniertes Flächengebilde mit maschenartiger Struktur wird zu einem klebefreien Halbzeug, dem sogenannten "Prepreg", vorgetrocknet und durch Tiefziehen unter Wärme verformt. Entsprechend der Ausführung des Formwerkzeuges erhält man eine Strukturwabe, die Näpfchen mit rundem oder sechseckigem Querschnitt, Stege oder beliebige andere geometrische Formen aufweist.

Werden zwei dünne, tragende Deckschichten über ein leichtes Kernmaterial zu einer Sandwich-Struktur verbunden, so erhält man gewichtsbezogene Festigkeiten, die die Werte von Stahl um ein Vielfaches übertreffen können.

Bekannten Kernmaterialien sind Schaumstoffe und Materialien mit Bienenwabenstruktur, die sogenannten "Honeycombs".

Die Festigkeit, Belastbarkeit und Verwindungssteifigkeit einer Sandwich-Konstruktion hängen wesentlich davon ab, wie fest die Verbindung zwischen Deckschicht und Kern ausfällt.

Bei der Verwendung von Honeycombs als Kernmaterial bestehen Probleme in bezug auf die Festigkeit und Belastbarkeit, da nur die dünnen Stege der senkrecht zur Deckschicht stehenden Wabenwände als Klebefläche dienen. Zur Herstellung hochwertiger Verbindungen sind daher aufwendige Klebeverfahren unter Einsatz kostspieliger Klebefilme erforderlich. Die Festigkeit und Steifigkeit dieser Kernmaterialien steigt in der Regel mit ihrem Raumgewicht.

Zur Verklebung der Sandwich-Kernmaterialien mit den Deckschichten werden die verschiedensten filmartigen, flüssigen und/oder pastösen Klebstoffe eingesetzt. Üblicherweise beträgt der Klebstoffeinsatz 150 bis etwa 300 g/m2 pro Verbindungsfläche.

Aus der US-A-3,738,886 ist ein Verfahren zur Verbindung von Schichten, insbesondere von offenporigen Schaumschichten, aus aliphatischen Polyolefinen mit Substraten. Bei diesem Verfahren wird das Polyolefinmaterial und das Substrat an den miteinander zu verklebenden Flächen mit einer schmelzkleberfreien Flüssigkeit mit einer bestimmten Mindestleitfähigkeit (in der Druckschrift wird als Untergrenze 1x10⁻⁴ mhos cm⁻¹ genannt) benetzt. Dann werden die zu verklebenden Flächen aufeinandergedrückt und die vereinigten Schichten einem elektromagnetischen Hochfrequenzfeld ausgesetzt.
Als Benetzungsflüssigkeit werden wässrige, tensidhaltige Elektrolytlösungen eingesetzt, die auch zusätzliche nicht wärmeaktivierbare Klebemittel, z.B. Stärkeäther, enthalten können.
Bei diesem Verfahren erfolgt die Verklebung durch Verschmelzen (welding) der Polyolefin-Grenzschicht mit dem Substrat.

Aus der AU-A-0 483 635 ist ein Verfahren bekannt zum Aufbringen von Polyvinylidenfluorid-Schutzschichten auf Substrate, wobei die durch den hohen Wärmeausdehnungskoeffizient, die hohe Schrumpfneigung und das Durchlässigkeitsverhalten der Polyvinylidenfluorid-Schichten hervorgerufe Ablösungsneigung der Schichten überwunden werden soll.
Bei diesem Verfahren wird das Substrat mit einem saugfähigen und flexiblen Schicht aus Fasermaterial, z.B. einem Glasfasergewebe, bedeckt, das vorher mit einer ggf. tensidhaltigen Dispersion von Polyvinylidenfluorid-Teilchen getränkt, und ggf. auch getrocknet, worden ist.
Als flüssige Phase der Polyvinylidenfluorid-Dispersion wird eine Flüssigkeit eingesetzt, die bei Normaltemperatur das Polymer nicht löst, bei erhöhter Temperatur aber ein Zusammenfließen der Polymerteilchen zu einer Schicht bewirkt.

Bei Verklebung von Kernmaterialien mit Deckschichten steigt ihre Druckfestigkeit und Drucksteifigkeit gegenüber dem unverklebten Zustand in der Regel an. Beispielsweise erhöht sich die Druckfestigkeit von Honeycombs aus Aramidfaserverstärktem Phenolharz durch das Verkleben mit Deckschichten um den Faktor 1,2. Bei Strukturwaben aus Polyesterfasern mit Phenolharzimprägnierung beträgt die Steigerung der Druckfestigkeit etwa das 1,1 bis 1,4-fache.

Der vorliegenden Erfindung lag die Aufgabe zugrunde, durch ein verbessertes Verklebungsverfahren die Festigkeitskennwerte von Sandwich-Kernmaterialien, insbesondere von Strukturwaben, zu verbessern, ohne dabei die Klebstoffmenge gegenüber dem Stand der Technik zu erhöhen.

Die vorstehend genannte Aufgabe wird gelöst durch ein Verfahren zur Herstellung von Verbundwerkstoffen aus luftdurchlässigen Kernmaterialien und Deckschichten durch Verkleben der luftdurchlässigen Kernmaterialien mit den Deckschichten mit einem flüssigen und/oder pastösen Klebstoff, das dadurch gekennzeichnet ist, daß das Kernmaterial mit einer Flüssigkeit benetzt wird, die zudem als Lösungsmittel und/oder Benetzungsmittel für den Klebstoff dient, und daß man als luftdurchlässiges Kernmaterial imprägnierte, textile, dreidimensional verformte Flächengebilde mit maschenartiger Struktur einsetzt.

Sowohl im Rahmen der vorliegenden Erfindung als auch im Stand der Technik wird für die Verklebung von vorzugsweise Strukturwaben ein Epoxidharz in Verbindung mit einem Epoxidhärter eingesetzt. Bei einem Klebstoffeinsatz von 300 g/m2 auf der Seite der Wabenköpfchen und 200 g/m2 auf der Seite der Strukturwabenbasis erhöht sich die Druckfestigkeit gegenüber dem unverklebten Zustand um den Faktor 1,4.

Überraschenderweise wurde festgestellt, daß sich die Druck- und Scherfestigkeit ebenso wie der Druck- und Schubmodul bei den erfindungsgemäß eingesetzten Kernmaterialien erheblich über den Faktor von 1,4 hinaus verbessern läßt, wenn die Kernmaterialien einige Minuten vor dem Verkleben mit einer Flüssigkeit benetzt werden, die zudem als Lösungsmittel und/oder Benetzungsmittel für den Klebstoff dient.

Es konnte festgestellt werden, daß durch den Zusatz der Benetzungsflüssigkeit ein Anfeuchten der Kernmaterialien beobachtet werden kann. Insbesondere im Falle der Strukturwaben konnte festgestellt werden, daß der Klebstoff an der Wandung der Waben aufsteigt und diese nach dem Aushärten zusäztzlich verstärkt. Ohne die Benetzung steigt der Klebstoff nicht an der Wandung empor. Auch durch die Verwendung von hydrophilen Spezialhärtern, die dem Fachmann geläufig sind, läßt sich eine Steigerung der Druck- und Scherfestigkeit der Leichtbauteile erzielen. Von bestimmten Epoxidharz-Härtern, wie beispielsweise Beckopox®-Spezialhärter VEH 14 ist bekannt, daß in Verbindung mit lösemittelfreien Epoxidharzen relativ lichtbeständige und relativ chemikalienbeständige Beschichtungen herstellbar sind. Bei diesem Härter handelt es sich um ein modifiziertes niedrig viskoses Polyamin, von dem bekannt ist, daß durch dessen Zusatz Epoxidharze auf feuchten, mineralischen Untergründen besser haften und auch für Beschichtungen unter Wasser geeignet sind.

Mit Hilfe der vorliegenden Erfindung ist es daher möglich, bei allen flüssigen und/oder pastösen Klebstoffen eine wesentliche Verstärkung der Kernmaterialien zu erzielen, wenn diese vor dem Verkleben mit einer Flüssigkeit befeuchtet werden, die sowohl die Kernmaterialien als auch den Klebstoff gut benetzt und dadurch die Benetzung der Kernmaterialien durch den Kleber fördert. Insbesondere bei hochviskosen oder thixotropen Klebern fördert die Benetzung mit einer Flüssigkeit, die als Lösungsmittel für den Klebstoff wirkt, diesen Effekt.

Die besondere Festigkeit der Flächengebilde oder Kettgewirke wird durch eine feine Netzwerkstruktur mit Verbindungsstegen, Knotenpunkten und einer Vielzahl luftgefüllter Hohlräume erzielt. Erreicht wird diese Struktur durch die Ausformung einer textilen Fläche und ihre Verfestigung mit Kunstharz. Entsprechend der Ausführung des Formwerkzeugs erhält man eine Strukturwabe, die Näpfchen mit runden oder sechseckigem Querschnitt, Stege oder beliebige andere geometrische Formen aufweist. Die so hergestellten Strukturwaben zeichnen sich durch eine Reihe von Besonderheiten aus: geringes Raumgewicht bis etwa 10 kg/m³ herab, hohe thermische Beständigkeit, hohe spezifische Schubfestigkeit, hohe Naßfestigkeit, Korrosionsfestigkeit, Luftdurchlässigkeit und Flexibilität, da das Material rollbar und räumlich verformbar ist.

In einer besonderen Ausführungsform der vorliegenden Erfindung werden als Imprägnierungsmittel der Flächengebilde oder Kettgewirke Melaminharze und/oder Phenolharze eingesetzt. Derartige Materialien sind dem Fachmann bekannt. Beispielsweise ist ein Verbund der Polyesterfaser Trevira® mit dem Phenolharz Phenodur® für die Herstellung solcher Netzwerkstrukturen äußerst vorteilhaft. So erfüllen Phenolharze als Bindemittel hohe Ansprüche an die thermische Stabilität.

Während prinzipiell alle bekannten Klebestoffe für die Herstellung der Verbindung zwischen Kernmaterial und Deckschicht eingesetzt werden können, wird gemäß einer bevorzugten Ausführungsform der vorliegenden Erfindung die Verwendung von Epoxidharzen als Klebstoff in Verbindung mit modifizierten Polyaminen als Härter bevorzugt.

Hierbei werden besonders feste Verbindungen erzielt.

In einer bevorzugten Ausführungsform der vorliegenden Erfindung wird als Lösungs- und/oder Benetzungsmittel Wasser, Aceton, Spezialbenzin 100/140, Xylol, Methylethylketon, Methylisobutylketon, Methylglykolacetat, Ethylglykolacetat, Methylglykol, Ethylglykol, Ethanol, Butanol und/oder i-Propanol eingesetzt. Maßgeblich für die Auswahl des Lösungs- und/oder Benetzungsmittels ist die Kompatibilität sowohl mit dem Kernmaterial und dem darauf aufgebrachten Harz einerseits und der Deckschicht andererseits.

Das in-Kontakt-bringen der Kernmaterialien mit den Lösungs-und/oder Benetzungsmitteln kann in verschiedenster Weise erfolgen. Beispielsweise hat sich als positiv herausgestellt, die Kernmaterialien einige Minuten vor dem Verkleben mit dem Lösungs- und/oder Benetzungsmittel zu befeuchten. Eine weitere Möglichkeit des in-Kontakt-bringens mit dem Kernmaterialien besteht darin, eine Lösung und/oder Emulsion des Klebers direkt mit den Kernmaterialien in Kontakt zu bringen.

Aus der Reihe der oben genannten Lösungs- und/oder Benetzungsmittel sind insbesondere Aceton und Wasser hervorzuheben, wobei insbesondere die Verwendung von Wasser im Sinne der vorliegenden Erfindung bevorzugt ist.

Im Falle der Verwendung von Wasser werden zusätzlich oberflächenaktive Verbindungen eingesetzt. Derartige Tenside sind dem Fachmann im weitesten Sinne bekannt und können beispielsweise aus Ullmanns Encyclopädie der technischen Chemie, 4. Auflage, Band 22, Seiten 455 - 515 entnommen werden.

In bezug auf die Arbeitssicherheit und Arbeitshygiene stellt das Befeuchten der Kernmaterialien mit einer wäßrigen Netzmittellösung aus ökologischen Gründen eine besonders vorteilhafte Ausführung dar.

Eine insbesondere bevorzugte Ausführungsform der vorliegenden Erfindung besteht in dem Einsatz von 0,1 bis 5 Gew.-%, eine darüberhinaus bevorzugte Ausführungsform besteht im Einsatz von 1 bis 3 Gew.-% oberflächenaktiver Verbindung in Wasser.

Neben den bevorzugt eingesetzten Strukturwaben wird auch bei anderen Sandwich-Kernmaterialien eine Steigerung der Festigkeitseigenschaften erzielt. So ist beispielsweise bei der Anwendung des Verfahrens auf die Verklebung perforierter Papierwabenkerne mit einer Dicke von bis zu 15 mm eine Steigerung der Festigkeit zu erreichen, wenn die Oberflächenbeschaffenheit der Waben eine gute Ausbreitung des Klebstoffs auf der Wabenwandung zuläßt und die Perforation nach dem Verkleben ein vollständiges Austrocknen der Kerne ermöglicht.

Weiterhin wird auch bei luftundurchlässigen Sandwich-Kernen, wie beispielsweise nicht-perforierten Honeycombs, eine Steigerung der Festigkeit beobachtet, wenn wenigstens eine der Sandwich-Deckschichten luftdurchlässig und damit geeignet ist, das Lösungs- und/oder Benetzungsmittel hindurchtreten zu lassen.

### Beispiel 1

Ein Polyestergewirke mit einem Gewicht von 120 g/m2 wurde mit einem handelsüblichen Melaminharz imprägniert und zu einer Netzwerkstruktur mit einer Dicke von 8,4 mm unter Bildung einer Strukturwabe mit Näpfchen mit rundem Querschnitt geformt. Das Raumgewicht dieses Strukturbauteils betrug 36 kg/m3.

Die vorgenannte Strukturwabe wurde mit einer Deckschicht aus einem weichmacherfreien schlagzähen Hart-PVC (Hostalit Z) verklebt. Als Klebemittel diente ein Epoxidharz Beckopox® EP 128, d.h. ein nicht modifiziertes, mittel- bis niedrigviskoses Epoxidharz mit einer dynamischen Viskosität nach DIN 53 015 bei 23 oC von ca. 1 000 mPa.s, einem Epoxid-Äquivalentgewicht nach DIN 53 188 von 190 bis 210, einem Epoxidwert von 0,48 bis 0,53 und einer Dichte von 1,12 bei 25°C.

Vor der Verklebung wurde die Strukturwabe 0,5 min in eine wäßrige Netzmittellösung, enthaltend 2 Gew.-% eines handelsüblichen anionischen Tensids eingetaucht.

Nach dem Trocknen ergab sich eine Druckfestigkeit des Verbundkörpers von 0,77 N/mm2 und ein Druckmodul von 35,4 N/mm2.

### Vergleichsbeispiel 1

Unter Verwendung des in Beispiel 1 genannten Gewirkes, jedoch ohne Benetzung der Strukturwaben, wurde ein gleicher Verbundkörper hergestellt.

Hierbei ergab sich eine Druckfestigkeit von 0,34 und ein Druckmodul von 18,7 des Verbundkörpers.

### Beispiel 2

Ein Polyestergewirke mit einem Gewicht von 70 g/m2 wurde mit einem Phenolharz imprägniert und zu einer Dicke von 7,5 mm entsprechend Beispiel 1 geformt. Die Strukturwabe wies ein Raumgewicht von 24 kg/m3 auf. Nach Eintauchen der Strukturwabe im Verlauf von 0,5 min in eine wäßrige Netzmittellösung, enthaltend 2 Gew.-% eines handelsüblichen anionischen Tensids wurde entsprechend Beispiel 1 ein Verbundkörper hergestellt.

Unter Verwendung der gleichen Kleber wie in Beispiel 1 wurde eine Druckfestigkeit von 0,53 N/mm2 und ein Druckmodul von 11,9 N/mm2 erreicht.

### Vergleichsbeispiel 2

Unter Verwendung eines Polyestergewirkes gemäß Beispiel 2 wurde in entsprechender Vorgehensweise ein Verbundkörper ohne Benetzung hergestellt.

Hierbei wurde eine Druckfestigkeit von 0,12 N/mm2 und ein Druckmodul von 7,6 N/mm2 erreicht.

## Patentansprüche

1. Verfahren zur Herstellung von Verbundwerkstoffen aus luftdurchlässigen Kernmaterialien und Deckschichten durch Verkleben der luftdurchlässigen Kernmaterialien mit den Deckschichten mit einem flüssigen und/oder pastösen Klebstoff, dadurch gekennzeichnet, daß das Kernmaterial mit einer Flüssigkeit benetzt wird, die zudem als Lösungsmittel und/oder Benetzungsmittel für den Klebstoff dient, und daß man als luftdurchlässiges Kernmaterial harzimprägnierte textile, dreidimensional verformte Flächengebilde mit maschenartiger Struktur einsetzt.

2. Verfahren nach Anspruch 1, dadurch gekennzeichnet, daß man Flächengebilde mit Netzwerkstruktur mit Verbindungsstegen, Knotenpunkten und einer Vielzahl offener Zwischenräume einsetzt.

3. Verfahren nach Anspruch 2, dadurch gekennzeichnet, daß man als Imprägnierungsmittel der Flächengebilde oder Kettgewirke Melaminharze und/oder Phenolharze einsetzt.

4. Verfahren nach Ansprüchen 1 bis 3, dadurch gekennzeichnet, daß man als Klebstoffe Epoxidharze in Verbindung mit modifizierten Polyaminen als Härter einsetzt.

5. Verfahren nach Ansprüchen 1 bis 4, dadurch gekennzeichnet daß man als Lösungs- und/oder Benetzungsmittel Wasser, Aceton, Spezialbenzin 100/140, Xylol, Methylethylketon, Methylisobutylketon, Methylglykolacetat, Ethylglykolacetat, Methylglykol, Ethylglykol, Ethanol, Butanol, i-Propanol und/oder deren Gemische einsetzt.

6. Verfahren nach Anspruch 5, dadurch gekennzeichnet, daß im Falle der Verwendung von Wasser zusätzlich oberflächenaktive Verbindungen eingesetzt werden.

7. Verfahren nach Anspruch 6, dadurch gekennzeichnet daß man 0,1 bis 5 gew.-%ige oberflächenaktive Verbindungen enthaltende wäßrige Lösungen einsetzt.

8. Verfahren nach Anspruch 6, dadurch gekennzeichnet, daß man 1 bis 3 gew.-%ige oberflächenaktive Verbindungen enthaltende wäßrige Lösungen einsetzt.

## Claims

1. A process for the manufacture of composites from air-permeable cores and facings by bonding the air-permeable cores to the facings with a liquid and/or pasty adhesive, characterized in that the core is wetted with a liquid which also serves as a solvent and/or wetting agent for the adhesive, and resin-impregnated textile fabrics with a mesh structure, shaped in three dimensions, are used as the air-permeable core.

2. A process as claimed in claim 1, characterized in that textile fabrics having a network structure with interconnecting webs, assemblage points and a large number of open interstices are used.

3. A process as claimed in claim 2, characterized in that melamine resins and/or phenolic resins are used as impregnating agents for the textile fabrics or warp-knitted fabrics.

4. A process as claimed in claims 1 to 3, characterized in that the adhesives used are epoxy resins in combination with modified polyamines as hardeners.

5. A process as claimed in claims 1 to 4, characterized in that the solvents and/or wetting agents used are water, acetone, special petroleum ether 100/140, xylene, methyl ethyl ketone, methyl isobutyl ketone, methyl glycol acetate, ethyl glycol acetate, methyl glycol, ethyl glycol, ethanol, butanol, i-propanol and/or mixtures thereof.

6. A process as claimed in claim 5, characterized in that surface-active compounds are added when water is used.

7. A process as claimed in claim 6, characterized in that 0.1 to 5% by weight aqueous solutions containing surface-active compounds are used.

8. A process as claimed in claim 6, characterized in that 1 to 3% by weight aqueous solutions containing surface-active compounds are used.

## Revendications

1. Procédé de fabrication de matériaux composites constitués d'une âme perméable à l'air et de semelles, par collage de l'âme perméable à l'air et des semelles, avec une colle liquide et/ou pâteuse, caractérisé en ce que l'on mouille l'âme avec un liquide qui sert en outre de solvant et/ou d'agent mouillant pour la colle, et en ce que l'on utilise comme âme perméable à l'air un produit en nappe texte à structure en mailles imprégné avec une résine, façonné en trois dimensions.

2. Procédé selon la revendication 1, caractérisé en ce que l'on utilise un produit en nappe à structure réticulée avec des nervures de liaison, des noeuds et un grand nombre d'interstices ouverts.

3. Procédé selon la revendication 2, caractérisé en ce que l'on utilise des résines de mélamine et/ou des résines phénoliques comme agents d'imprégnation des produits en nappe ou tissus tricotés en chaîne.

4. Procédé selon les revendications 1 à 3, caractérisé en ce que l'on utilise comme colles des résines époxy avec des polyamines modifiées comme durcisseurs.

5. Procédé selon les revendications 1 à 4, caractérisé en ce que l'on utilise comme solvant et/ou agent mouillant de l'eau, de l'acétone, une essence spéciale 100/140, du xylène, de la méthyléthylcétone, de la méthylisobutylcétone, de l'acétate de méthylglycol, de l'acétate d'éthylglycol, du méthylglycol, de l'éthylglycol, de l'éthanol, du butanol, de l'isopropanol et/ou leurs mélanges.

6. Procédé selon la revendication 5, caractérisé en ce que, dans le cas où l'on utilise de l'eau, on ajoute des composés tensioactifs.

7. Procédé selon la revendication 6, caractérisé en ce que l'on utilise des solutions aqueuses contenant de 0,1 à 5 % en masse de composés tensioactifs.

8. Procédé selon la revendication 6, caractérisé en ce que l'on utilise des solutions aqueuses contenant de 1 à 3 % en masse de composés tensioactifs.
